# EUROPÄISCHE PATENTSCHRIFT

(11) **EP 1 397 588 B1**
(45) Veröffentlichungstag und Bekanntmachung des Hinweises auf die Patenterteilung: **04.01.2006**
(21) Anmeldenummer: 02727941.3
(22) Anmeldetag: 21.05.2002
(51) Int. Cl.: F02M 25/00, F02C 3/00

(54) **VERFAHREN ZUM BETRIEB EINER KRAFTMASCHINE**
METHOD FOR OPERATING AN INTERNAL COMBUSTION ENGINE
PROCEDE POUR FAIRE FONCTIONNER UN MOTEUR

(30) Priorität: 21.06.2001 CH 113101
(43) Veröffentlichungstag der Anmeldung: 17.03.2004
(73) Patentinhaber: Alstom Technology Ltd, 5400 Baden (CH)
(72) Erfinder: FRUTSCHI, Hans, Ulrich, CH-5223 Riniken (CH)
(86) Internationale Anmeldenummer: PCT/IB2002/001766
(87) Internationale Veröffentlichungsnummer: WO 2003/001046

(56) Entgegenhaltungen:
- DE-A- 3 142 851
- US-A- 4 785 622
- PATENT ABSTRACTS OF JAPAN vol. 017, no. 111 (M-1376), 8. März 1993 (1993-03-08) & JP 04 298674 A (SUZUKI MOTOR CORP), 22. Oktober 1992 (1992-10-22)
- PATENT ABSTRACTS OF JAPAN vol. 015, no. 217 (M-1120), 4. Juni 1991 (1991-06-04) & JP 03 061658 A (SUZUKI MOTOR CORP), 18. März 1991 (1991-03-18)
- PATENT ABSTRACTS OF JAPAN vol. 005, no. 155 (M-090), 30. September 1981 (1981-09-30) & JP 56 083516 A (TOYOTA MOTOR CORP), 8. Juli 1981 (1981-07-08)
- PATENT ABSTRACTS OF JAPAN vol. 2000, no. 13, 5. Februar 2001 (2001-02-05) & JP 2000 282894 A (HITACHI LTD), 10. Oktober 2000 (2000-10-10)

## Beschreibung

### Technisches Gebiet

Die Erfindung betrifft ein Verfahren gemäss dem Anspruch 1, welches Verfahren dazu dient, das Arbeitsmittel einer Kraftmaschine mit innerer Verbrennung mit Feuchte anzureichern.

### Stand der Technik

Bei aufgeladenen Kolbenmotoren, insbesondere grossen Dieselmotoren mit Turboaufladung, findet die Ladeluftkühlung verbreitet Verwendung. Durch die Kühlung der vorverdichteten Verbrennungsluft steigt die Dichte des angesaugten Arbeitsmittels und damit die Füllung der Zylinder. Bei Kühlem, die auf dem Wärmeaustausch mit Umgebungsluft, Kühlwasser, oder sonstigen Kühlmedien basieren, erweist sich die Abfuhr von Enthalpie aus dem Kreisprozess heraus als nachteilig. Aus der US 4,440,116 oder der GB 2 259 326 ist jeweils bekannt, stromauf oder stromab des Verdichters eines Turboladers Wasser oder eine Wasser-Alkohol-Mischung in das Arbeitsmittel einzuspritzen. Durch die Verdunstung wird der Ansaugluft Wärme entzogen, und es kommt zu einer integralen Volumenabnahme des Arbeitsmittels. Die entzogene Wärme bleibt im entstehenden Wasserdampf enthalten, und geht dem Kreisprozess zunächst auf diese Weise nicht verloren. Eine solche Verdunstungskühlung kann auch für andere, beispielsweise in der US 4,664,091 beschriebene Zwecke verwendet werden. Durch die Einspritzung von Wasser zur Kühlung und andererseits als inertes Medium im Ansaugtrakt oder unmittelbar im Brennraum von Kraftmaschinen mit innerer Verbrennung kann die Bildung von Stickoxiden reduziert werden. Bei Kolbenmotoren, welche mit Fremdzündung betrieben werden, also beispielsweise beim Betrieb mit Vergaserkraftstoffen oder Brenngasen, kann die Neigung zur gefürchteten klopfenden Verbrennung reduziert werden. Speziell bei sehr heissen und trockenen Umgebungsbedingungen kann die Kühlung der Ansaugluft durch Einbringung und Verdunstung von Wasser auch bei nicht aufgeladenen Motoren oder anderen Kraftmaschinen mit innerer Verbrennung von Vorteil sein, um die Füllung der Brennräume zu erhöhen und die benötigte Verdichtungsarbeit zu senken. In diesem Zusammenhang kann es auch interessant sein, in die Ansaugluft soviel Wasser einzubringen, dass auch während der Verdichtungsphase noch Tropfen vorhanden sind. Die Verdunstung dieser Tropfen während der Verdichtung sorgt für eine intensive Innenkühlung während des Verdichtungsprozesses, und damit zu einer weiteren Reduktion der Verdichtungsarbeit. Der entstehende Wasserdampf hingegen leistet bei der Expansion Nutzarbeit. Dieser insgesamt leistungssteigemde Effekt wurde bereits in den 40er und 50er Jahren beobachtet, wenn bei geschlossenen Gasturbinenkreisläufen Vor-oder Zwischenkühler undicht waren, so, dass Kühlwasser in den Verdichter eintrat,

Problematisch bei den angesprochenen Verfahren zur Konditionierung des Arbeitsmittels ist die kontinuierliche Bereitstellung von Wasser, welches hohe Reinheitsanforderungen erfüllen muss, und welches bei einer Kraftmaschine mit innerer Verbrennung mit dem Abgas ausgestossen wird, und somit verloren geht. Beispielsweise bei Dieselmotoren oder Gasturbogruppen, welche zum Antrieb von Fahrzeugen verwendet werden, muss dann stetig ein hinreichend grosser Wassertank transportiert werden, um den Wasserbedarf während einer bestimmten Fahrtstrecke oder Betriebszeit zu decken.

In Gasturbinenanlagen sind weiterhin Methoden bekannt, durch die Einbringung von Dampf in das Arbeitsmittel Abwärme aus dem Abgas zu rekuperieren. So ist aus der US 5,689,948 eine Kraftwerksanlage bekannt, bei der die Abwärme einer Gasturbine zur Dampferzeugung genutzt wird. Der Dampf wird an geeigneter Stelle in das gespannte Arbeitsmittel der Gasturbogruppe eingebracht, und in der Gasturbine unter Abgabe von Nutzleistung entspannt. Mit derartigen Techniken lassen sich bei vergleichsweise kleinem Aufwand sehr gute Kennzahlen bezüglich des Wirkungsgrades und der Leistung erzielen. Nachteilig ist der hohe Verbrauch an Wasser, da der erzeugte Wasserdampf mit dem Abgas in die Atmosphäre ausgestossen wird. Gerade in ariden Gebieten lassen sich die benötigten Wassermengen auf Dauer nicht oder nur höchst unwirtschaftlich bereitstellen. Auch die oben genannten Verfahren zur Kühlung des angesaugten Arbeitsmittels vorgängig oder während der Verdichtung lassen sich auch in Verbindung mit Gasturbogruppen vorteilhaft einsetzen.

Weiterhin ist auch bekannt, zur Verminderung der Stickoxidemissionen Wasser oder Dampf in die Brennkammer einer Gasturbogruppe einzubringen.

Bekannt ist weiterhin, Dampf zur Kühlung der thermisch hochbelasteten Komponenten einer Gasturbogruppe einzusetzen, und diesen Dampf nach erfolgter Kühlung in das Arbeitsmittel abströmen zu lassen.

Bei jedem der genannten Verfahren aber wird dem Arbeitsmittel einer Kraftmaschine mit innerer Verbrennung - je nachdem, der Ansaugluft, der teilverdichteten oder verdichteten Verbrennungsluft, oder dem Heissgas - ein Wassermassenstrom zugeführt, welcher nach dem Stand der Technik mit dem Abgas - mit anderen Worten, dem entspannten Arbeitsmittel - in die Atmosphäre ausgestossen wird. In der Konsequenz müssen für solche Verfahren qualitativ hochwertige Wassermengen von durchaus einigen Tonnen pro Stunde bereitgestellt werden. Dies aber ist häufig aus politischen, wirtschaftlichen, oder auch moralethischen und sozialen Gründen nicht oder nur sehr schwer durchsetzbar, weshalb der Einsatz von technisch sinnvollen und erstrebenswerten Lösungen oft nicht möglich ist.

In der US 5,843,214 wird daher vorgeschlagen, Wasser, welches ― beispielsweise bei einer STIG-Gasturbine - in das Arbeitsmittel einer Kraftmaschine mit innerer Verbrennung eingebracht wurde, im Abgas, nachgängig der Entspannung des Arbeitsmittels, zu kondensieren und in das Arbeitsmedium zurückzuführen. Ein autarker Betrieb ist aber selbstverständlich erst dann möglich, wenn die im Abgas enthaltene Feuchte gross genug ist, um in einem Abgaskondensator einen Wassermassenstrom zu gewinnen, der wenigstens dem zur Einbringung in das Arbeitsmittel benötigten Wasser- oder Dampfmassenstrom entspricht. Vor einem autarken Betrieb ist es also notwendig, das Arbeitsmittel mit Feuchte anzureichern.

Das Dokument EP 137 3687, welches Stand der Technik nach Art. 5 413) EPÜ darstellt, beschreibt ein Verfahren, bei dem Feuchte aus einem Abgasstrom abgeschieden und wieder in die Verbrennung eingebracht wird.

### Darstellung der Erfindung

Aufgabe der Erfindung ist es, ein Verfahren zum Betrieb einer Kraftmaschine mit innerer Verbrennung anzugeben, bei dem zur Anreicherung des Arbeitsmittels der Kraftmaschine mit Feuchte auf eine externe Zufuhr von Wasser vollständig verzichtet werden kann, und eine Möglichkeit besteht, durch geeignete Massnahmen schnell ehöhte Feuchte bereit zustellen.

Erreicht wird dies erfindungsgemäss durch die Gesamtheit der Merkmale des Anspruchs 1. Das Verfahren zur Anreicherung des Arbeitsmittels einer Kraftmaschine mit innerer Verbrennung mit Feuchte umfasst erfindungsgemäss die folgenden Schritte:
- Starten des Kreisprozesses der Kraftmaschine;
- Verbrennung von kohlenwasserstoff- und/oder wasserstoffhaltigen Brennstoffen;
- Abscheidung eines ersten Verbrennungswasser-Massenstroms, welcher aus der Verbrennung des kohlenwasserstoff- und/oder wasserstoffhaltigen Brennstoffs resultiert, aus dem Abgas der Kraftmaschine;
- Einbringung des abgeschiedenen Wassermassenstroms an geeigneter Stelle in das Arbeitsmittel der Kraftmaschine;
- wenigstens teilweise Abscheidung des eingebrachten und eines zusätzlichen Verbrennungswasser-Massenstroms aus dem Abgas;
- wenigstens teilweise Rezirkulation des eingebrachten sowie des zusätzlichen Verbrennungs-Wassermassenstroms in das Arbeitsmittel der Kraftmaschine, und wenigstens temporär einen zwischen gespeicherten Verbrennungswasser-Massenstom aus einem Reservoir in das Arbeitsmittel einzubringen, und das Reservoir im stationären Betriebs aufzufüllen .

Bevorzugte und vorteilhafte Weiterbildungen des erfindungsgemässen Verfahrens sind in den Ansprüchen 2 bis 17 angegeben.

Kern der Erfindung ist es also, dass die gesamte in das Arbeitsmittel der Kraftmaschine eingebrachte Wassermenge aus der Verbrennung selbst resultiert, respektive ein geringer Anteil bei einer luftatmenden Maschine ― unwillentlich - mit der Umgebungsluft angesaugt wurde. Beim Start wird ein erster durch die Oxidation kohlenwasserstoff- oder wasserstoffhaltiger Brennstoffe entstehender Verbrennungswasser-Massenstrom aus dem Arbeitsmittel nachgängig der Entspannung, also aus dem Abgas der Kraftmaschine, abgeschieden und in das Arbeitsmittel der Kraftmaschine rezirkuliert. Somit gelangt dieser rezirkulierte Verbrennungswasser-Massenstrom wieder in das Abgas; zusätzlich entsteht durch die Verbrennung weiteren Brennstoffs zusätzliches Verbrennungswasser, dergestalt, dass der Partialdruck des Wasserdampfes im Abgas und damit die abscheidbare Wassermenge ansteigt. Auf diese Weise wird durch die Rezirkulation des Verbrennungswassers einerseits und die Erzeugung zusätzlichen Verbrennungswassers andererseits das Arbeitsmittel der Kraftmaschine immer stärker mit Feuchte angereichert. Das Arbeitsmittel des Kreisprozesses wird also erfindungsgemäss mit Feuchte aufgeladen, ohne eine externe Zufuhr von Wasser zu benötigen. Beim Betrieb einer Kraftmaschine mit innerer Verbrennung gemäss dem erfindungsgemässen Verfahren ist keinerlei Infrastruktur für eine Wasserversorgung notwendig. Da die gesamte Wassermenge aus einem Kondensationsprozess stammt, erfüllt das abgeschiedene Wasser auch schon hohe Reinheitsanforderungen, weshalb sich prinzipiell - zumindest beim Einsatz schwefelfreier und auch ansonsten nicht kontaminierter Brennstoffe, insbesondere bei der Verbrennung von Erdgas ― die Wasseraufbereitung wenig aufwändig gestaltet.

Insgesamt zeigt sich Erdgas ohnehin als sehr geeigneter Brennstoff bei der Durchführung des erfindungsgemässen Verfahrens: Durch den hohen Methan-Anteil diese Brennstoffes ist der Partialdruck des Wasserdampfes im reinen Verbrennungsprodukt hoch, wodurch eine schnelle Aufladung des Arbeitsmittels mit Feuchte erreichbar ist, selbstverständlich ist die Durchführung des Verfahrens aber auch bei der Verwendung höhermolekularer Kohlenwasserstoffe, wie eben Dieselöl, möglich, wobei die Aufladerate aber durch das ungünstigere H/C-Verhältnis geringer ist, derart, dass das Erreichen des stationären Endzustandes entsprechend länger dauert.

Der in das Arbeitsmittel eingebrachte Wassermassenstrom ist selbstverständlich nach oben begrenzt; in der Konsequenz produziert eine Kraftmaschine, welche erfindungsgemäss betrieben wird, schliesslich einen Wasserüberschuss. Dieser kann unter Anderem genutzt werden, um ein Verbrennungswasser-Reservoir aufzufüllen, welches bei einem weiteren Start temporär genutzt werden kann, um Wasser zur Einbringung in das Arbeitsmittel bereitzustellen, und somit eine schnellere Anreicherung mit Feuchte zu erzielen. Gleichwohl arbeitet das Verfahren auch dann vollkommen autark, da auch das im Reservoir zwischengespeicherte Wasser vollständig - bis auf einen geringen Anteil, welcher bei einer luftatmenden Kraftmaschine aus der Luftfeuchte der Umgebungsluft stammt - aus der Verbrennung innerhalb der Kraftmaschine resultiert.

Im stationären Betrieb wird ein Zustand erreicht, in dem der Gasturbinenprozess einen Wasserüberschuss generiert, der gerade in wasserarmen Regionen für vielfältige Zwecke verwendbar ist, wie zur Brauch- oder Trinkwassergewinnung, oder zur Bewässerung landwirtschaftlich nutzbarer Flächen.

Zur geeigneten Stelle der Einbringung des Wassermassenstroms in das Arbeitsmittel ist zu bemerken, dass diese fallweise zu bestimmen ist. So kann der Wassermassenstrom beispielsweise zur Kühlung eines aus der Umgebung angesaugten Luftmassenstroms dienen, der Wassermassenstrom kann nachgängig einer Verdichtung oder auch während einer Verdichtung in das Arbeitsmittel eingebracht werden, ebenso während oder nachgängig der Wärmezufuhr zum Arbeitsmittel, oder auch während des Expansionsvorgangs. Die geeignete Stelle wird der Fachmann ohne Weiteres aufgrund seines allgemeinen Fachwissens festzulegen verstehen. In der Folge ist der Begriff Arbeitsmittel, wie er in der vorliegenden Schrift verwendet wird, weit zu fassen; er umfasst insbesondere auch Medium, welches sich im Ansaugtrakt oder in der Zuströmung einer Kraftmaschine befindet, ebenso wie das abströmende entspannte Arbeitsmedium nachgängig der Entspannung unter Abgabe von Nutzarbeit, welches bei einer Kraftmaschine mit innerer Verbrennung im Wesentlichen mit einem Abgas gleichzusetzen ist. Der Wassermassenstrom kann im Übrigen in flüssiger Form, oder als Sattdampf oder überhitzter Dampf in das Arbeitsmittel eingebracht werden, ohne das Wesen der Erfindung zu berühren.

In einer ersten Ausführungsform des erfindungsgemässen Verfahrens wird der Wassermassenstrom wenigstens teilweise zur Ladeluftkühlung einer aufgeladenen Verdrängermaschine verwendet, beispielsweise in einem Einspritz- oder Verdunstungskühler, der stromab des Luftverdichters eines turboaufgeladenen Dieselmotors angeordnet ist.

In einer zweiten Ausführungsform wird der Wassermassenstrom wenigstens teilweise zur Stickoxidminderung in einen Brennraum der Kraftmaschine eingebracht.

In einer weiteren Ausführungsform wird der Wassermassenstrom wenigstens teilweise in den Ansaugtrakt der Kraftmaschine eingebracht; hierbei kann das angesaugte Arbeitsmittel auch übersättigt werden, so, dass während des Verdichtens durch Verdunstung eine günstige Innenkühlung erreicht wird.

Eine weitere besonders günstige Ausführungsform des erfindungsgemässen Verfahrens ist die Anwendung bei der Realisation eines sogenannten und an sich bekannten STIG- (STeam lnjection Gas turbine) Prozesses, wobei der Wassermassenstrom nachgängig einer Verdampfung und bevorzugt einer Überhitzung in ein gespanntes Arbeitsmittel der Gasturbogruppe eingeleitet wird. Allgemein kann es sich bei der Einbringung des Wassermassenstroms in verdichtetes Arbeitsmittel immer als günstig erweisen den Wassermassenstrom, auch wenn keine Verdampfung erfolgt, vorgängig der Einbringung in das Arbeitsmittel aufzuheizen.

Ein weiterer Anwendungsfall sind Verfahren, bei denen Wasser oder Dampf in das Kühlsystem einer Gasturbogruppe eingebracht wird, und von dort in das Arbeitsmittel überströmt; solche Betriebsverfahren sind beispielsweise aus der EP 985 891 und der korrespondierenden US 6,161,385, oder aus der GB 2 236 145 bekannt. Die hier aufgeführte Aufzählung von Anwendungsfällen soll dabei lediglich einen Eindruck von den vielfältigen Möglichkeiten geben, die Erfindungsidee zu nutzen, und erhebt keinesfalls den Anspruch auf Abgeschlossenheit.

Es wurde oben bereits impliziert, dass der in das Arbeitsmittel einzubringende Wassermassenstrom auf einen Sollwert einzustellen sei. Ein solcher Sollwert wird mit Vorteil in Abhängigkeit von einer Leistungskenngrösse der Kraftmaschine vorgegeben. In einer weiter bevorzugten Verfahrensvariante wird der Wassermassenstrom nicht auf einen Absolutwert eingestellt, sondern als Relativwert, bezogen auf den Brennstoffmassenstrom. Bei der Nutzung des Wassermassenstroms zur Kühlung des angesaugten Arbeitsmittels kann mit Vorteil auch auf einen Zielwert der Luftfeuchte oder der Temperatur geregelt werden.

Es versteht sich weiterhin von selbst, dass auch eine Kombination verschiedener Einbringungen des Wassermassenstroms in das Arbeitsmittel möglich ist.

### Kurze Beschreibung der Zeichnung

Die Erfindung wird nachfolgend anhand eines in der Zeichnung dargestellten Ausführungsbeispiels näher erläutert. Es zeigen
- Figur 1 einen turboaufgeladenen Dieselmotor, der zur Durchführung eines in den Ansprüchen gekennzeichneten Verfahrens vorgesehen ist;
- Figur 2 eine Kraftwerksanlage mit einer Gasturbogruppe, welche zur Durchführung eines in den Ansprüchen gekennzeichneten Verfahrens vorgesehen ist.

### Weg zur Ausführung der Erfindung

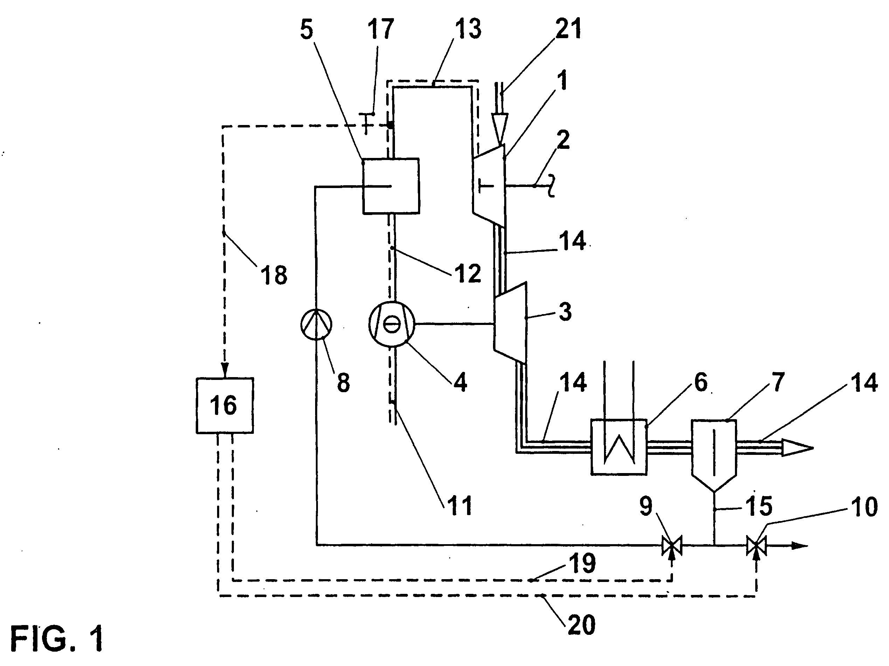

Figur 1 zeigt einen mit Turboaufladung versehenen Dieselmotor 1, der über eine Abtriebswelle 2 einen Generator, ein Fahrzeug, oder sonst einen Leistungsverbraucher antreibt. Abgas 14 des Dieselmotors strömt in die Turbine 3 eines Abgasturboladers. Die Turbine 3 treibt einen Radialverdichter 4 an. Dieser Radialverdichter verdichtet einen Ansaugluftstrom 11 vor, dergestalt, dass die Zylinder des Dieselmotors bei gegebenem Hubvolumen mit einer grösseren Verbrennungsluftmenge gefüllt werden. Bei der Vorverdichtung wird der Ansaugluftstrom erwärmt, mit wiederum negativen Auswirkungen auf die Zylinderfüllung. Daher ist zwischen dem Verdichter 4 des Abgasturboladers und dem Motor 1 ein Ladeluftkühler 5 vorgesehen. Ladeluft 12 strömt in den Ladeluftkühler 5 ein und wird dort gekühlt, und der Motor saugt gekühlte Ladeluft 13 mit einer entsprechend höheren Luftdichte an. Das Hubvolumen des Motors wird daher mit einer entsprechend grossen Luftmasse gefüllt, was die Verbrennung von mehr Brennstoff und damit eine höhere Leistung bedeutet. Der Ladeluftkühler ist hier als Verdunstungskühler ausgeführt, das heisst, es wird Wasser eingedüst, welches verdunstet und zu einer Kühlung der Ladeluft führt, ohne dabei dem Kreisprozess Wärme zu entziehen. Dabei ist es prinzipiell auch möglich, die Ladeluft zu überfeuchten, dergestalt, dass Flüssigkeitströpfchen in die Zylinder des Dieselmotors 1 gelangen, welche während des Verdichtungstaktes zu einer Innenkühlung und damit zu einer Verringerung der notwendigen Verdichtungsarbeit führen. Stromab der Turboladerturbine 3 sind im Abgastrakt ein Abgaskondensator 6 und ein Wasserabscheider 7 angeordnet. Im Abgas 14 enthaltene Feuchtigkeit wird im Kondensator 6 auskondensiert, und im Abscheider 7 als Wassermassenstrom 15 abgeschieden. Eine Pumpe 8 fördert wenigstens einen Teil dieses Wassermassenstroms in den Ladeluftkühler 5, wo er wiederum in das Arbeitsmedium eingebracht wird. Durch die Rezirkulation des in den Ladeluftkühler eingebrachten Wassermassenstroms kann die Ladeluftkühlung zwar im stationären Betrieb autark, ohne externe Wasserzufuhr, betrieben werden; bei schwankender Last oder ganz besonders beim Anfahren stellt sich aber die Frage nach der Anreicherung des Arbeitsmittels mit Feuchte, damit überhaupt ein hinreichender Wassermassenstrom aus dem Abgas abgeschieden werden kann, damit der Ladeluftkühler 5 seine Soll-Kühlleistung erbringt. Bei unterschiedlicher Motorleistung variiert der Ladedruck des Turbolader-Verdichters, und damit die Temperatur der Ladeluft 12. Das heisst, die in den Ladeluftkühler einzubringende Wassermenge zum Erreichen eines Soll-Betriebszustandes, beispielsweise einer Solltemperatur der gekühlten Ladeluft 13, schwankt. Bei einer Reduktion der Motorleistung und damit des Ladedruckes muss ein Teil des im Arbeitsmedium enthaltenen Wassers über ein Überschussventil 10 verworfen werden, wenn eine Überfeuchtung der Ladeluft vermieden werden soll. Wenn andererseits der Ladedruck mit der Motorleistung steigt, muss zusätzliches Wasser bereitgestellt werden, um die erforderliche Kühlleistung zu erreichen. Diese Frage stellt sich ganz besonders bei Fahrzeugantrieben, die ja einerseits relativ häufige Lastwechsel zu bewältigen haben, andererseits auch in der Lage sein müssen, auf freier Strecke zu starten, ohne einen fast unbegrenzten Wasservorrat mit sich zu führen. Erfindungsgemäss erfolgt die Anreicherung des Arbeitsmittels mit Feuchte daher ausschliesslich mit durch die Verbrennung von Kohlenwasserstoffen oder von wasserstoffhaltigen Brennstoffen 21 in der Kraftmaschine erzeugtem Wasser. Beim Start des Dieselmotors ist der Abgasturbolader ohnehin nicht im Betrieb, und in einer Startphase liefert er auch nur einen sehr geringen Ladedruck. Der Motor 1 wird daher ohne Ladeluftkühlung gestartet. Bei der Verbrennung von Dieselöl 21, welches weitgehend aus Kohlenwasserstoffen besteht, entsteht eine ersteverbrennungswassermenge, welche im Abscheider 7 abgeschieden und in den Ladeluftkühler 5 geführt wird. Dieser erste abgeschiedene Verbrennungswasser-Massenstrom gerät so mit dem Arbeitsmittel wiederum in das Abgas 14, und wird dort abgeschieden und in den Ladeluftkühler rezirkuliert. Gleichzeitig entsteht mit der weiteren Verbrennung weitere Feuchte, die ebenfalls abgeschieden und in den Ladeluftkühler eingebracht wird. Auf diese Weise steigt der zur Verfügung stehende Wassermassenstrom stetig an, und das Arbeitsmittel wird mit Feuchte angereichert. Solange keine volle Wassermenge aus dem Abgas gewinnbar ist, arbeitet der Ladeluftkühler mit verminderter Leistung, wodurch auch die maximal zur Verfügung stehende Motorleistung vermindert ist; gleichwohl ist der Motor voll funktionsfähig. Als einzige Einschränkung ist zu nennen, dass auf schwankende Lastanforderungen, die ja mit wechselndem Ladedruck und damit wechselnder Ladelufttemperatur einhergehen, nur mit einer gewissen Zeitverzögerung reagiert werden kann. Hier ist es aber möglich, ein nicht dargestelltes Verbrennungswasser-Reservoir vorzusehen, welches im stationären Betrieb durch die Verbrennung entstehendes Überschusswasser zwischenspeichert, und bei transienten Anforderungen temporär zur Verfügung stellt. Ein solches Reservoir kann dabei vergleichsweise klein ausgelegt werden, da jeweils nur temporär ein Teil der benötigten Wassermenge zur Verfügung gestellt werden muss, und das Reservoir andererseits wieder autark aufgeladen wird. In jedem Fall aber wird ausschliesslich durch die Verbrennung in der Kraftmaschine selbst entstandenes Wasser ― und, in geringem Ausmasse, mit der Umgebungsluft angesaugte Feuchte - zur Einbringung in das Arbeitsmittel verwendet, dergestalt, dass der Prozess vollkommen unabhängig von einer externen Wasserversorgung oder einem mittransportierten Wasservorrat abläuft. Die Regelung des in den Ladeluftkühler eingebrachten Wassermassenstroms erfolgt in Abhängigkeit von der Temperatur der gekühlten Ladeluft 13, dergestalt, dass die eingespritzte Wassermenge ausreicht, damit der Ladeluftkühler seine Soll-Kühlleistung erbringt, was letztlich indirekt einen Sollmassenstrom definiert. Eine Temperaturmessstelle 17 erfasst die Temperatur der Ladeluft stromab des Ladeluftkühlers 5. Ein Temperatursignal 18 wird an ein Steuergerät 16 geliefert, welches über Steuerleitungen 19, 20 auf zwei Stellorgane 9 und 10 eingreift. In einem ersten Betriebszustand ist das erste Stellorgan 9 vollständig geöffnet, und das Stellorgan 10 ist vollständig geschlossen. Der gesamte abgeschiedene Wassermassenstrom 15 wird über die Pumpe 8 in den Kühler 5 gefördert. Fällt die an der Messstelle 17 gemessene Temperatur unter einen unteren Grenzwert, wird die Wasserzufuhr durch das Stellorgan 9 gedrosselt. Gleichzeitig wird das Stellorgan 10 geöffnet, um überschüssiges abgeschiedenes Wasser zu verwerfen, oder einer anderen Verwendung zuzuführen. Auf diese Weise wird der dem Arbeitsmittel zugeführte Wassermassenstrom derart eingestellt, dass ein Zielwert für die Temperatur der gekühlten Ladeluft 13 möglichst genau eingehalten wird. Ebenso könnte statt der Temperatur auch die Feuchte der gekühlten Ladeluft 13 gemessen und geregelt werden, oder diese könnte als zusätzliche Grösse erfasst werden.

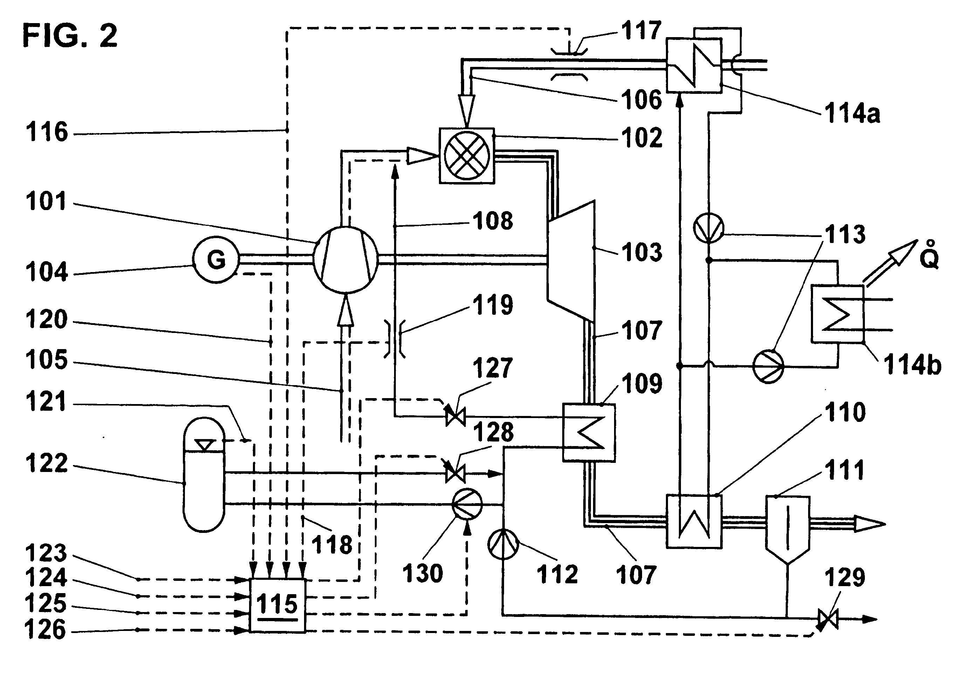

In der Figur 2 ist schematisch eine Kraftwerksanlage dargestellt, welche eine Gasturbogruppe zur Ausführung einer Variante des erfindungsgemässen Verfahrens umfasst. Ein Verdichter 101 saugt als Arbeitsmittel einen Luftmassenstrom 105 an, und verdichtet diesen. In einer Brennkammer 102 wird eine Brennstoffmenge 106 in der verdichteten Verbrennungsluft verbrannt. Dabei entstehendes gespanntes Heissgas wird in einer Turbine 103 unter Abgabe einer mechanischen Wellenleistung entspannt. Diese Leistung dient zum Antrieb des Verdichters 101 und eines Generators 104. Entspanntes Arbeitsmittel 107, welches bei einer Maschine mit innerer Verbrennung im eigentlichen Sinne ein Rauchgas ist, strömt aus der Turbine ab. Dieses entspannte Arbeitsmittel besitzt noch ein hohes kalorisches Potenzial. Die dargestellte Gasturbogruppe ist dafür ausgelegt, bei geringem Aufwand dieses kalorische Potenzial bestmöglich zu nutzen, ohne den für ein komplettes Kombikraftwerk notwendigen Aufwand zu betreiben. Hierzu wird dem gespannten Arbeitsmittel ein unter Druck stehender Wasser- oder Dampfmassenstrom 108 zugeführt, der vorgängig einen Abgaswärmetauscher 109 durchströmt, und somit Abwärme aus dem entspannten Arbeitsmittel in den thermodynamischen Kreisprozess zurückführt; bei der Zuführung grosser Dampfmengen wird von einem sogenannten STIG-Prozess gesprochen. Dies erhöht einerseits den durch die Turbine durchgesetzten Massenstrom, und hat somit unmittelbaren Einfluss auf die Leistung. Die Massenstromerhöhung hat weiterhin auch einen Einfluss auf das Druckverhältnis des Prozesses, wodurch sich der Druck des gespannten Arbeitsmediums in der Brennkammer 102 erhöht, was wiederum den Prozesswirkungsgrad erhöht. Die Einbringung des Wassers oder des Dampfes erfolgt entweder stromab der Brennkammer 102, am Eintritt in die Turbine oder in der Turbine selbst, oder, wie im Beispiel dargestellt, stromauf der Brennkammer 102 oder in die Brennkammer hinein; auch Kombinationen sind möglich. Die erste Verfahrensvariante hat den Vorteil, dass das Wasser oder der Dampf die Verbrennung nicht negativ zu beeinflussen vermag. Dieser an sich negative Effekt kommt zwar bei der Einbringung in die Brennkammer oder stromauf der Brennkammer zum Tragen, was aber auch durchaus wünschenswerte Effekte zeitigen kann: Zum Einen wird die Eindüsung von inerten Medien in die Reaktionszone einer Brennkammer häufig als probates Mittel zur Verminderung der Stickoxidbildung angewendet. Daneben erlaubt es diese Verfahrensvariante aufgrund des grösseren Massenstroms in der Brennkammer bei einem gegebenen oberen Grenzwert der Heissgasternperatur mehr Brennstoff zu feuern, was zu einer weiteren Leistungssteigerung führt. Für den Wirkungsgrad ist es weiterhin günstig, den Wasser- oder Dampfmassenstrom an einer Stelle möglichst hohen Prozessdruckes einzubringen; bei einer Gasturbogruppe mit sequenzieller Verbrennung, wie sie beispielsweise aus der EP 620 362 und den korrespondierenden US 5,454,220 und US 5,577,378 bekannt ist, welche Dokumente im Übrigen integrierende Bestandteile der vorliegenden Beschreibung darstellen, bedeutet dies, dass die Einbringung des Wassers oder des Dampfes bevorzugt im Bereich der ersten Brennkammer erfolgt. Insgesamt ist es im Hinblick auf die Leistung, im Allgemeinen auch im Hinblick auf den Wirkungsgrad, günstig, das Wasser oder den Dampf so einzubringen, dass dieser Massenstrom wenigstens einen Teil der Expansion über die Turbine mitmacht. Der Abgaswärmetauscher 109 ist vorliegend als Vorwärmer dargestellt. Selbstverständlich kann an dieser Stelle auch ein Dampferzeuger und -überhitzer angeordnet sein, was zu einer weiteren Wirkungsgraderhöhung beiträgt, andererseits aber auch den notwendig zu betreibenden apparativen Aufwand vergrössert. Es ist aus dem Stand der Technik bekannt, das in das Arbeitsmittel eingebrachte Wasser aus dem Abgas zurückzugewinnen. Hierzu ist im Strömungsweg des entspannten Arbeitsmittels ein Rauchgaskondensator 110 angeordnet, der das entspannte Arbeitsmedium unter die jeweilige Siedetemperatur des enthaltenen Wassers abkühlt. Im Effekt kondensiert das in das Arbeitsmittel eingebrachte Wasser oder der in das Arbeitsmittel eingebrachte Dampf aus, und wird stromab in einem Kondensatabscheider 111 abgeschieden. Dieses Kondensat wird von einer Pumpe 112 auf einen Druck gefördert, der auf alle Fälle höher liegt als der Druck des Arbeitsmediums an der Stelle der Einbringung, im vorliegenden Falle höher als der Brennkammerdruck. Das Wasser wird wie beschrieben im Vorwärmer 109 aufgeheizt; an der Stelle des Vorwärmers 109 kann ohne Weiteres auch ein Verdampfer und ein Überhitzer angeordnet sein. Der Wassennassenstrom 108 wird als aufgeheiztes Druckwasser stromauf Brennkammer 102 in das gespannte Arbeitsmedium eingebracht, wobei, wie erwähnt, auch eine Einbringung an anderer geeigneter Stelle in das gespannte Arbeitsmedium möglich ist. Ebenfalls erwähnt wurde auch die Möglichkeit, das Druckwasser zu verdampfen und den so erzeugten Dampf vorgängig einer Einbringung in das gespannte Arbeitsmedium zu überhitzen. Durch diese Prozessführung wird ein grosser Teil der im entspannten Arbeitsmittel 107 enthaltenen Wärme in den Arbeitsprozess zurückgeführt und nutzbar gemacht. Im dargestellten Ausführungsbeispiel wird auch die auf einem niedrigen Temperaturniveau anfallende Kondensationswärme des Wasserdampfes genutzt. Dem Kondensator 110 wird kühles Medium zugeführt, welches die Kondensatorberohrung nach erfolgter Wärmeaufnahme aus dem entspannten Arbeitsmedium mit einer Temperatur von beispielsweise 70°C oder weniger verlässt. Umwälzpumpen 113 fördern einen Teil des erwärmten Kühlmittels in einen Brennstoffvorwärmer 114a, in dem die im Rauchgaskondensator 110 dem Abgas entzogene und bei niedriger Exergie vorliegende Wärme auf den Brennstoff übertragen und damit wieder dem thermodynamischen Kreisprozess zugeführt wird; ein weiterer Teil des erwärmten Kühlmittel wird durch eine Wärmesenke 114b, beispielsweise einen Kühlturm, gefördert, wo eine Wärmemenge Q abgeführt wird. Wie oben angedeutet, ist die Rekuperation von in das Arbeitsmittel eingebrachtem Wasser gerade in Verbindung mit dem STIG Prozess aus dem Stand der Technik bekannt. Gleichwohl muss das Arbeitsmittel, wie schon im ersten Ausführungsbeispiel, erst einmal mit Feuchte angereichert sein, um die erforderliche Wassermenge aus dem Abgas 107 gewinnen zu können. Bei Durchführung des erfindungsgemässen Verfahrens erfolgt dies vollkommen ohne externe Zufuhr von Wasser, ausschliesslich mit aus der Verbrennung resultierender Feuchte, weshalb die dargestellte Kraftwerksanlage auch ohne eine Zuführleitung für Wasser auskommt. Das dargestellte - optionale - Verbrennungswasser-Reservoir 122, dessen Funktion unten erläutert ist, wird erfindungsgemäss ebenfalls nur mit Verbrennungswasser, welches im stationären Betrieb als Überschuss anfällt, aufgeladen. Erfindungsgemäss wird das Arbeitsmittel nach dem Start der Gasturbogruppe mit durch die Verbrennung von kohlenwasserstoff- oder wasserstoffhaltigem Brennstoff 106 entstehendem Verbrennungswasser angereichert. Die Einbringung von Wasser oder Dampf in den Arbeitsprozess ist bevorzugt durch geeignete Kontroll- und Steuerorgane zu überwachen: Mit einem steigenden Massenstrom von zusätzlich eingebrachtem Medium wie eben Wasser oder Dampf steigt das Druckverhältnis des Prozesses der dargestellten Kraftwerksanlage an, wobei selbstverständlich ein Sicherheitsabstand zur Abreissgrenze des Verdichters gewahrt werden muss. Der einzubringende Massenstrom 108 wird daher auf einen Sollwert geregelt, oder es wird ein oberer Grenzwert vorgegeben. Dabei wird üblicherweise kein Absolutwert eingestellt, sondern ein relativ zur Brennstoffmenge leistungsabhängig vorgegebener Soll- oder Grenzwert. Die Steuerung und/oder Regelung erfolgt über eine zentrale Steuereinheit 115. Diese erhält eine Vielzahl von Messwerten. Über eine Signalleitung 116 wird ein Signal einer Brennstoff-Durchflussmessstelle 117 geliefert. Das Signal einer Wasser- oder Dampfmassenstrommessstelle 119 wird über eine Signalleitung 118 geliefert. Eine Signalleitung 120 gibt ein Leistungssignal des Generators 104. Weiterhin wird über eine Signalleitung 121 ein Niveausignal eines Behälters 122 zur Verfügung gestellt. Zusätzlich erhält die Steuereinheit 115 über eine weitere Signalleitungen 123, 124, 125, 126 zusätzliche Informationen über Betriebsparameter der Kraftwerkanlage, Umgebungsbedingungen, und dergleichen mehr. Mit Hilfe dieser Informationen ist die Steuereinheit 115 in der Lage, eine Leistungskenngrösse zu bilden, in Abhängigkeit von welcher die einzubringende Wasser- oder Dampfmenge 108 einzustellen ist. Dabei ist in einem Speicher der Steuereinheit eine Sollwerttabelle abgelegt. Aus den Messwerten der Durchflussmessstellen 117 und 119 wird der Istwert bestimmt, und in Abhängigkeit von der Sollwertabweichung wird primär auf die Stellorgane 127 und 129 eingegriffen, daneben auch auf ein Stellorgan 128 und eine Förderpumpe 130. Zum Ablauf des Verfahrens ist folgendes zu sagen: Beim Start der Kraftwerksanlage wird der in die Brennkammer 102 strömenden Verbrennungsluft kohlenwasserstoff- oder wasserstoffhaltiger Brennstoff 106 zugeführt. Bei der Verbrennung dieses Brennstoffs entsteht ein gespanntes Heissgas, welches als Verbrennungsprodukt unter anderem Wasserdampf enthält. Das gespannte Heissgas wird auf bekannte Weise unter Abgabe mechanischer Leistung in der Turbine 103 entspannt. Stromab der Turbine durchströmt das nunmehr entspannte Arbeitsmedium den Vorwärmer 109 und den Abgaskondensator 110. Im Abscheider 111 wird ein erster Verbrennungswasser-Massenstrom vom verbleibenden Rauchgas getrennt. Das Rauchgas strömt in die Atmosphäre ab. Das abgeschiedene Wasser wird zunächst bei geschlossenem Stellorgan 129 von einer Pumpe 112 auf einen Druck gefördert, der auf alle Fälle höher ist, als der Druck in der Brennkammer 102. Das Druckwasser durchströmt sekundärseitig den Vorwärmer 109, welcher primärseitig vom entspannten Arbeitsmittel 107 durchströmt wird. Der so erwärmte Wassermassenstrom 8 wird in das gespannte Arbeitsmittel der Gasturbogruppe eingebracht. Das erste Verbrennungswasser ist somit wieder in das Arbeitsmittel der Kraftmaschine rückgeführt, und wird nach der Entspannung in der Turbine 103 wieder kondensiert, abgeschieden, und erneut in das Arbeitsmittel zurückgeführt. Durch die Verbrennung entsteht zusätzliches Verbrennungswasser, welches ebenfalls im Abgastrakt abgeschieden und in das Arbeitsmittel zurückgeführt wird. Auf diese Weise wird das Arbeitsmittel mit Feuchte angereichert, das heisst, der Partialdruck des Wasserdampfes im Arbeitsmittel steigt an, ohne dass eine externe Zufuhr von Wasser, das nicht aus der Verbrennung resultiert, notwendig wäre. Bei der fortlaufenden Erhöhung des Wassermassenstroms ist einerseits darauf zu achten, die Verbrennung nicht ungünstig zu beeinflussen, andererseits darf das Druckverhältnis des Arbeitsprozesses nicht soweit erhöht werden, dass ein Sicherheitsabstand zur Abreissgrenze des Verdichters nicht mehr gewährleistet ist. Um dies zu verhindern greifen eben die in der Steuereinheit 115 implementierten Kontrollmechanismen. Aus den erfassten Messwerten wird der Betriebszustand der Gasturbogruppe ermittelt. An einer Brennstoffmengenmessstelle 117 wird der Brennstoffmassenstrom ermittelt. In Abhängigkeit von diesen Grössen ist ein zulässiger Maximalwert des einzubringenden Wassermassenstroms 108 bekannt. Der Istwert des Wassermassenstroms wird an einer Durchflussmessstelle 119 ermittelt und mit dem Sollwert oder Grenzwert verglichen. Steigt der ermittelte Istwert über den Maximalwert an, wird das Stellorgan 127 angedrosselt. Gleichzeitig wird ermittelt, ob das Niveau im Behälter 122 unterhalb eines Maximalwertes liegt. Ist dies der Fall, wird die Förderpumpe 130 in Betrieb genommen, und im Abscheider 111 über den maximal zulässigen Massenstrom hinaus abgeschiedenes Verbrennungswasser wird in das als Druckspeicher ausgeführte Verbrennungswasser-Reservoir122 gefördert; dabei ist das Stellorgan 128 vollständig geschlossen. Das hier unter Druck gespeicherte Wasser kann durch Öffnen des Stellorgans 128 in das Arbeitsmedium eingebracht werden, wenn die im Abscheider 111 anfallende Wassermenge unterhalb des Maximal- oder Sollwertes des einzubringenden Wassermassenstroms liegt. Diese Verfahrensweise ist auch vorteilhaft, damit der Vorwärmer 109 gerade beim Start der Anlage nicht sekundärseitig trocken betrieben wird: Abgesehen von Fragen der Kühlung der Wärmetauschflächen des Vorwärmers wird durch die Gewährleistung einer ständigen hinreichenden sekundärseitigen Strömung die Eintrittstemperatur des entspannten Arbeitsmediums beim Eintritt in den Abgaskondensator 110 permanent auf einem niedrigen Wert gehalten. Zu beachten ist aber auch hierbei, dass das Reservoir 122 vorgängig mit Verbrennungswasser geladen wurde, derart, dass wiederum nur dem Verbrennungsprozess entstammendes Verbrennungswasser zur Anreicherung des Arbeitsmittels verwendet wird. Wenn das Niveau im Reservoir 122 einen Maximalwert erreicht hat, wird die Pumpe 130 ausser Betrieb genommen, und das Stellorgan 129 wird geöffnet, derart, dass überschüssiges im Abscheider 111 anfallendes Wasser über das Stellorgan 129 abströmen kann. Dieses Wasser kann einerseits verworfen werden; andererseits stammt es aus einem Kondensationsprozess, und weist bei der Verwendung schwefelfreier und auch ansonsten nicht toxinbelasteter ― etwa mit Schwermetallen kontaminierter- Brennstoffe zum Betrieb der Gasturbogruppe eine vergleichsweise hohe Reinheit auf. Insbesondere in Gebieten mit Wasserknappheit kann dieses Wasser dann ohne Weiteres oder mit einer wenig aufwändigen Nachbehandlung qualitativ anspruchsvollen Verwendungszwecken, wie der Bewässerung landwirtschaftlich genutzter Flächen oder gar als Trinkwasser zugeführt werden; das Wasser kann aber auch als Brauchwasser, beispielsweise für verfahrenstechnische Prozesse, verwendet werden. Bei der Verbrennung schwefelhaltiger Brennstoffe hingegen müssen auch apparativ die entsprechenden Vorkehrungen getroffen werden; da ein Unterschreiten den Taupunktstemperatur erfindungsgemäss unumgänglich ist, müssen dann etwa auch unter Säureeinwirkung korrosionsfeste Stähle verwendet werden. Insgesamt ist bei der Realisation der Erfindung der Verwendung schwefelfreier Brennstoffe ganz klar der Vorzug zu geben. Die oben beschriebenen Kontrollmechanismen funktionieren vollkommen analog, wenn der Wassermassenstrom an anderer Stelle, beispielsweise stromauf des Verdichters oder im Verdichter, in das Arbeitsmittel der Gasturbogruppe eingebracht wird. Die Grössen, auf welche geregelt wird, ebenso wie die der Steuereinheit zugeführten Messwerte sind dann andere; die Aufteilung der kondensierten Wassermassenströme in rezirkuliertes Wasser und Überschusswasser wird aber vollkommen analog vorgenommen, was für den Fachmann ohne Weiteres nachvollziehbar ist, und keiner weiteren Explizierungen bedarf.

### Bezugszeichenliste

- 1: Dieselmotor
- 2: Abtriebswelle
- 3: Turboladerturbine
- 4: Radialverdichter, Turboladerverdichter
- 5: Ladeluftkühler
- 6: Abgaskondensator
- 7: Wasserabscheider
- 8: Pumpe
- 9: Stellorgan
- 10: Stellorgan, Überschussventil
- 11: Ansaugluftstrom
- 12: Ladeluft
- 13: gekühlte Ladeluft
- 14: Abgas
- 15: Wassermassenstrom
- 16: Steuergerät
- 17: Temperaturmessstelle
- 18: Temperatursignal
- 19: Steuerleitung
- 20: Steuerleitung
- 21: Brennstoff
- 101: Verdichter
- 102: Brennkammer
- 103: Turbine
- 104: Generator
- 105: Ansaugluftmassenstrom
- 106: Brennstoffmassenstrom
- 107: entspanntes Arbeitsmittel, Abgas, Rauchgas
- 108: einzubringender Wassermassenstrom, einzubringender Dampfmassenstrom
- 109: Vorwärmer
- 110: Abgaskondensator
- 111: Abscheider
- 112: Pumpe
- 113: Umwälzpumpe
- 114a: Wärmesenke, Brennstoffvorwärmer
- 114b: Wärmesenke
- 115: Steuereinheit
- 116: Signalleitung
- 117: Durchflussmessstelle für Brennstoff
- 118: Signalleitung
- 119: Durchflussmessstelle für Wasser oder Dampf
- 120: Signalleitung
- 121: Signalleitung
- 122: Verbrennungswasser-Reservoir, Behälter, Druckspeicher
- 123: Signalleitung
- 124: Signalleitung
- 125: Signalleitung
- 126: Signalleitung
- 127: Stellorgan
- 128: Stellorgan, Absperrorgan
- 129: Stellorgan, Absperrorgan
- 130: Förderpumpe

## Patentansprüche

1. Verfahren zum Betrieb einer Kraftmaschine mit innerer Verbrennung, wobei ein Verfahren zur Anreicherung des Arbeitsmittels der Kraftmaschine mit Feuchte umfasst:
- Starten des Kreisprozesses der Kraftmaschine;
- Verbrennung von kohlenwasserstoff- und/oder wasserstoffhaltigen Brennstoffen (21; 106);
- Abscheidung eines ersten Verbrennungswasser-Massenstroms, welcher aus der Verbrennung des kohlenwasserstoff- und/oder wasserstoffhaltigen Brennstoffs resultiert, aus dem Abgas (14; 107) der Kraftmaschine;
- Einbringung des abgeschiedenen Wassermassenstroms (15; 108) an geeigneter Stelle in das Arbeitsmittel der Kraftmaschine;
- wenigstens teilweise Abscheidung des eingebrachten und eines zusätzlichen Verbrennungswasser-Massenstroms aus dem Abgas;
- wenigstens teilweise Rezirkulation des eingebrachten sowie des zusätzlichen Verbrennungs-Wassermassenstroms in das Arbeitsmittel der Kraftmaschine,**dadurch gekennzeichnet, dass** temporär ein zwischengespeicherter Verbrennungswasser-Massenstrom aus einem Verbrennungswasser-Reservoir (122) in das Arbeitsmittel der Kraftmaschine eingebracht wird, welches Reservoir im stationären Betrieb der Kraftmaschine mit überschüssigem Verbrennungswasser aufgefüllt wird.

2. Verfahren zum Betrieb einer Kraftmaschine mit innerer Verbrennung, mit Einbringung eines Wassermassenstroms (15; 108) in das Arbeitsmittel der Kraftmaschine, **dadurch gekennzeichnet, dass** der gesamte Wassermassenstrom aus Verbrennungswasser und gegebenenfalls aus einer mit einer Verbrennungsluft eingebrachten Luftfeuchte stammt.

3. Verfahren nach Anspruch 2 **dadurch gekennzeichnet, dass** wenigstens zeitweise wenigstens ein Teil des aus dem Abgas abgeschiedenen Verbrennungswassers einem Verbrennungswasser-Reservoir (122) und/oder einem externen Verbraucher zugeführt wird.

4. Verfahren nach Anspruch 3 **dadurch gekennzeichnet, dass** der einzubringende Wassermassenstrom (108) temporär wenigstens teilweise mit in dem Verbrennungswasser-Reservoir (122) zwischengespeichertem Verbrennungswasser gedeckt wird.

5. Verfahren nach einem der vorstehenden Ansprüche, wobei die Kraftmaschine eine aufgeladene Verdrängermaschine ist, und der Wassermassenstrom wenigstens teilweise zur Ladeluftkühlung stromab eines Verbrennungsluftverdichters (4) in das Arbeitsmittel eingebracht wird.

6. Verfahren nach einem der vorstehenden Ansprüche, **dadurch gekennzeichnet, dass** der Wassermassenstrom wenigstens teilweise zur Stickoxidreduktion im Brennraum der Kraftmaschine in das Arbeitsmittel eingebracht wird.

7. Verfahren nach einem der vorstehenden Ansprüche, **dadurch gekennzeichnet, dass** der Wassermassenstrom wenigstens teilweise zur Ansaugluftkühlung einer luftatmenden Kraftmaschine in das Arbeitsmittel eingebracht wird.

8. Verfahren nach einem der vorstehenden Ansprüche, **dadurch gekennzeichnet, dass** der Wassermassenstrom wenigstens teilweise in ein gespanntes Arbeitsmittel einer Gasturbogruppe (101, 102, 103) eingebracht wird.

9. Verfahren nach einem der vorstehenden Ansprüche, **dadurch gekennzeichnet, dass** der einzubringende Wassermassenstrom vorgängig der Einbringung in das Arbeitsmittel aufgeheizt wird.

10. Verfahren nach einem der vorstehenden Ansprüche, **dadurch gekennzeichnet, dass** der einzubringende Wassermassenstrom vorgängig der Einbringung in ein gespanntes Arbeitsmittel unter Druck gesetzt und verdampft wird.

11. Verfahren nach Anspruch 10, **dadurch gekennzeichnet, dass** die entstehende Dampfmenge vorgängig der Einbringung in ein gespanntes Arbeitsmittel überhitzt wird.

12. Verfahren nach einem der vorstehenden Ansprüche, **dadurch gekennzeichnet, dass** ein Sollwert für die in das Arbeitsmedium einzubringende Wassermenge vorgegeben wird, und die tatsächlich eingebrachte Wassermenge auf diesen Sollwert eingeregelt wird.

13. Verfahren nach Anspruch 12, **dadurch gekennzeichnet, dass** der Sollwert abhängig von einer Leistungskenngrösse der Kraftmaschine vorgegeben wird.

14. Verfahren nach einem der Ansprüche 12 oder 13, **dadurch gekennzeichnet, dass** der Sollwert im Verhältnis zu einer Brennstoffmenge vorgegeben wird.

15. Verfahren nach einem der Ansprüche 1 bis 11, **dadurch gekennzeichnet, dass** die einzubringende Wassermenge abhängig von einem gemessenen Temperatur- oder Feuchtewert eingestellt wird.

16. Verfahren nach einem der Ansprüche 12 bis 15, **dadurch gekennzeichnet, dass** beim Anfahren oder in anderen instationären Betriebszuständen eine geringere Wassermenge als der Sollwert in das Arbeitsmittel eingebracht wird, und der Wassermassenstrom mit steigendem Partialdruck des Wasserdampfes im Abgas der Kraftmaschine sukzessive bis zum Sollwert erhöht wird.

17. Verfahren nach einem der Ansprüche 12 bis 16, **dadurch gekennzeichnet, dass** beim Anfahren oder in anderen instationären Betriebszuständen der Kraftmaschine in einem Reservoir zwischengespeichertes Verbrennungswasser zur temporären Erhöhung der in das Arbeitsmittel eingebrachten Wassermenge über den aus dem Abgas auskondensierten Massenstrom hinaus bis zum Sollwert verwendet wird.

## Claims

1. Method for operating an engine with internal combustion, in which a method for enriching the working medium of the engine with moisture comprises:
- starting the circulation process of the engine;
- combustion of hydrocarbon-containing and/or hydrogen-containing fuels (21; 106);
- separating a first combustion water mass flow, which results from the combustion of the hydrocarbon-containing and/or hydrogen-containing fuel, from the exhaust gas (14; 107) from the engine;
- introducing the water mass flow (15; 108) which has been separated out into the working medium of the engine at a suitable location;
- at least partial separation of the combustion water mass flow which has been introduced and an additional combustion water mass flow from the exhaust gas;
- at least partial recirculation of the combustion water mass flow which has been introduced and the additional combustion water mass flow into the working medium of the engine, **characterized in that** a combustion water mass flow which has been in intermediate storage is temporarily introduced into the working medium of the engine from a combustion water reservoir (122) which is filled with excess combustion water during steady-state operation of the engine.

2. Method for operating an engine with internal combustion, involving introduction of a water mass flow (15; 108) into the working medium of the engine, **characterized in that** the entire water mass flow originates from combustion water and if appropriate from atmospheric humidity introduced with combustion air.

3. Method according to Claim 2, **characterized in that** at least from time to time at least some of the combustion water which has been separated from the exhaust gas is fed to a combustion water reservoir (122) and/or an external consumer.

4. Method according to Claim 3, **characterized in that** the water mass flow (108) which is to be introduced is temporarily at least partially covered by combustion water which has been in intermediate storage in the combustion water reservoir (122).

5. Method according to one of the preceding claims, in which the engine is a supercharged displacement machine, and the water mass flow is introduced into the working medium at least partially for charge air cooling downstream of a combustion air compressor (4).

6. Method according to one of the preceding claims, **characterized in that** the water mass flow is introduced into the working medium at least partially for the reduction of nitrogen oxides in the combustion chamber of the engine.

7. Method according to one of the preceding claims, **characterized in that** the water mass flow is introduced into the working medium at least partially for intake-air cooling of an air-aspirating engine.

8. Method according to one of the preceding claims, **characterized in that** the water mass flow is introduced at least partially into a pressurized working medium of a gas turbine set (101, 102, 103).

9. Method according to one of the preceding claims, **characterized in that** the water mass flow which is to be introduced is heated before it is introduced into the working medium.

10. Method according to one of the preceding claims, **characterized in that** the water mass flow which is to be introduced is placed under pressure and evaporated before it is introduced into a pressurized working medium.

11. Method according to Claim 10, **characterized in that** the quantity of steam which is formed is superheated before it is introduced into a pressurized working medium.

12. Method according to one of the preceding claims, **characterized in that** a set value is predetermined for the quantity of water to be introduced into the working medium, and the quantity of water which is actually introduced is adjusted to this set value.

13. Method according to Claim 12, **characterized in that** the set value is predetermined as a function of an output characteristic variable of the engine.

14. Method according to one of Claims 12 or 13, **characterized in that** the set value is predetermined as a ratio of a fuel quantity.

15. Method according to one of Claims 1 to 11, **characterized in that** the quantity of water to be introduced is set as a function of a measured temperature or humidity value.

16. Method according to one of Claims 12 to 15, **characterized in that** during starting-up or in other non-steady operating states, a lower quantity of water than the set value is introduced into the working medium, and the water mass flow is gradually increased to the set value as the partial pressure of the water vapour in the exhaust gas from the engine increases.

17. Method according to one of Claims 12 to 16, **characterized in that** during starting-up or in other non-steady operating states of the engine, combustion water which has been in intermediate storage in a reservoir is used to temporarily increase the quantity of water introduced into the working medium in addition to the mass flow which condenses out of the exhaust gas, until the set value is reached.

## Revendications

1. Procédé pour faire fonctionner un moteur à combustion interne, dans lequel un procédé pour enrichir le fluide de travail du moteur en humidité comprend :
- le lancement du cycle du moteur ;
- la combustion de combustibles contenant des hydrocarbures et/ou de l'hydrogène (21 ; 106) ;
- la séparation d'un premier débit d'eau de combustion qui résulte de la combustion du combustible contenant des hydrocarbures et/ou de l'hydrogène, du gaz d'échappement (14 ; 107) du moteur ;
- l'introduction du débit d'eau séparé (15 ; 108) à un endroit approprié dans le fluide de travail du moteur ;
- la séparation au moins partielle du débit d'eau de combustion introduit et d'un débit d'eau de combustion supplémentaire du gaz d'échappement;
- la recirculation au moins partielle du débit d'eau de combustion introduit ainsi que du débit d'eau de combustion supplémentaire dans le fluide de travail du moteur,
**caractérisé en ce que** l'on introduit temporairement dans le fluide de travail du moteur un débit d'eau de combustion stocké de manière intermédiaire provenant d'un réservoir d'eau de combustion (122), lequel réservoir est rempli en fonctionnement stationnaire du moteur avec de l'eau de combustion en excès.

2. Procédé pour faire fonctionner un moteur à combustion interne, comprenant l'introduction d'un débit d'eau (15 ; 108) dans le fluide de travail du moteur, **caractérisé en ce que** la totalité du débit massique d'eau provient de l'eau de combustion et éventuellement d'une humidité de l'air introduite avec l'air comburant.

3. Procédé selon la revendication 2, **caractérisé en ce qu'**au moins temporairement, au moins une partie de l'eau de combustion séparée du gaz d'échappement est acheminée à un réservoir d'eau de combustion (122) et/ou à un consommateur externe.

4. Procédé selon la revendication 3, **caractérisé en ce que** le débit massique d'eau à introduire (108) est couvert au moins temporairement par l'eau de combustion stockée de manière intermédiaire dans le réservoir d'eau de combustion (122).

5. Procédé selon l'une quelconque des revendications précédentes, dans lequel le moteur est une machine volumétrique suralimentée et le débit massique d'eau est introduit dans le fluide de travail au moins en partie en vue du refroidissement de l'air de charge en aval d'un compresseur d'air comburant (4).

6. Procédé selon l'une quelconque des revendications précédentes, **caractérisé en ce que** le débit massique d'eau est introduit dans le fluide de travail au moins en partie pour réaliser la réduction des oxydes d'azote dans la chambre de combustion du moteur.

7. Procédé selon l'une quelconque des revendications précédentes, **caractérisé en ce que** le débit massique d'eau est introduit dans le fluide de travail au moins en partie pour refroidir l'air d'admission d'un moteur aérobie.

8. Procédé selon l'une quelconque des revendications précédentes, **caractérisé en ce que** le débït massique d'eau est introduit au moins en partie dans un fluide de travail sous tension d'un groupe générateur à turbines à gaz (101, 102, 103).

9. Procédé selon l'une quelconque des revendications précédentes, **caractérisé en ce que** le débit massique d'eau à introduire est préalablement chauffé avant l'introduction dans le fluide de travail.

10. Procédé selon l'une quelconque des revendications précédentes, **caractérisé en ce que** le débit massique d'eau est préalablement mis sous pression et évaporé avant l'introduction dans un fluide de travail sous tension.

11. Procédé selon la revendication 10, **caractérisé en ce que** la quantité de vapeur produite est préalablement chauffée avant l'introduction dans un fluide de travail sous tension.

12. Procédé selon l'une quelconque des revendications précédentes, **caractérisé en ce que** l'on prédéfinit une valeur de consigne pour la quantité d'eau à introduire dans le fluide de travail, et la quantité d'eau introduite est ajustée à cette valeur de consigne.

13. Procédé selon la revendication 12, **caractérisé en ce que** la valeur de consigne est prédéfinie en fonction d'une valeur caractéristique de puissance du moteur.

14. Procédé selon l'une quelconque des revendications 12 ou 13, **caractérisé en ce que** la valeur de consigne est prédéfinie par rapport à une quantité de combustible.

15. Procédé selon l'une quelconque des revendications 1 à 11, **caractérisé en ce que** la quantité d'eau à introduire est ajustée en fonction d'une valeur de température ou d'humidité mesurée.

16. Procédé selon l'une quelconque des revendications 12 à 15, **caractérisé en ce que** lors du démarrage ou dans d'autres états de fonctionnement non stationnaires, on introduit une quantité d'eau inférieure à la valeur de consigne dans le fluide de travail et le débit massique d'eau est augmenté successivement jusqu'à la valeur de consigne avec une pression partielle croissante de la vapeur d'eau dans le gaz d'échappement du moteur.

17. Procédé selon l'une quelconque des revendications 12 à 16, **caractérisé en ce que** lors du démarrage ou dans d'autres états de fonctionnement non stationnaires du moteur, l'eau de combustion stockée de manière intermédiaire dans un réservoir est utilisée pour augmenter temporairement la quantité d'eau introduite dans le fluide de travail au-delà du débit massique condensé hors du gaz d'échappement jusqu'à la valeur de consigne.
